# EUROPEAN PATENT APPLICATION

(11) **EP 2 757 525 A1**
(43) Date of publication of application: **23.07.2014**
(21) Application number: 13151963.9
(22) Date of filing: 18.01.2013
(51) Int. Cl.: G06T 7/00, A61C 9/00, A61C 8/00

(54) **Method and system for restoring body parts**

(71) Applicant: Bertrand, Philippe, Montreal, Quebec H1T 4B3 (CA); Boyer, Hugo, Montreal, Quebec H2P 1V9 (CA)
(72) Inventor: Bertrand, Philippe, Montreal, Quebec H1T 4B3 (CA); Boyer, Hugo, Montreal, Quebec H2P 1V9 (CA)
(74) Representative: Wittmann, Günther

(57) **Abstract**

The present relates to a method and system for determining the position and orientation of implants located in a body part of a patient. The method and system comprise determining voxels having an intensity value corresponding to implants in a three-dimensional radiographic representation of the body part. The method and system further comprise generating multiple random virtual implants, providing a score for each virtual implant, until obtaining a score that identifies implants. The score is based on a number of voxels having an intensity value corresponding to implants contained in each generated virtual implant. And the method and system comprise determining, based on the score of virtual implants, the position and orientation of the implants located in the body part.

## Description

### TECHNICAL FIELD

The present disclosure relates to restoration of body parts.

### BACKGROUND

Medical implants are used in various applications for the restoration or the replacement of body parts. For instance, such implants may be used to attach a prosthesis to a bone. These implants can be installed prior to the design of the prosthesis, as it may be requested by the type of restoration or replacement to be performed on the body part.

Known methods applied for the design of prosthesis after installation of medical implants in a body part may involve, for example, the use of two-dimensional radiographic (X-ray) images to measure the distance between implants. Other methods may require the use of a camera like in laparoscopic interventions to retrieve the position of installed medical implants.

In the field of dental restoration, implant location data is often obtained by creating a model of the dental structure using a conforming material applied to the structure to retrieve imprints that are used afterwards to obtain a casting for the fabrication of a medical model and/or to obtain implant location data by measurement. Also, the position and orientation of the implants is sometimes estimated from the specifications of surgical guides used for implants installation.

However, those methods are invasive and can be time ineffective for a patient, as they lack accuracy and need further adjustments of the prosthesis to be precisely adapted to the installed implants. Therefore, there is a need for a method and system for restoring body parts.

### SUMMARY

It is a broad aspect of an embodiment to provide a system for determining the position and orientation of implants located in a body part of a patient. The system comprises a processing unit, which determines voxels having an intensity value representing the implants in a three-dimensional radiographic representation of the body part. For doing so, the processing unit generates multiple random virtual implants and calculates a score for each virtual implant, until obtaining a score that identifies implants located in the body part, the score being based on a number of voxels having an intensity value corresponding to the implants contained in the virtual implant. The processing unit determines based on the score of each virtual implant the position and orientation of implants in the body part.

It is another broad aspect of an embodiment to provide a method for determining the position and orientation of implants located in a body part of a patient. The method comprises uploading a three-dimensional radiographic representation of the body part, the three-dimensional radiographic representation having voxels of different intensity values. The method further comprises determining voxels having an intensity value corresponding to implants, based on an intensity value representing the implants in the radiographic representation; selecting a region to be searched for implants in the radiographic representation; and generating multiple random virtual implants in the selected region until obtaining a score that identifies implants located in the body part, the score being based on the number of voxels having an intensity value corresponding to implants contained in each generated virtual implant. The method further comprises determining, based on the score of virtual implants, the position and orientation of the implants; and generating data to be used to design a medical model adapted to the implants located in the body part.

According to another broad aspect of an embodiment, there is provided a method for fabricating a medical model for assembly of implants in a body part of a patient. The method comprises determining a relative position and orientation of the implants by processing, by means of a computer, a three-dimensional radiographic representation of the body part. The three-dimensional radiographic representation has voxels of intensity values representative of the presence of implants. The method also comprises retrieving dimensional parameters of the implants from a data base providing dimensional information per type of implant. The method further comprises designing a virtual medical model of a fixture having a shape and size adapted to enable proper assembly of the fixture on at least some of the implants in the body part. The method furthermore comprises generating design data based on information related to the virtual medical model. And the method also comprises generating a physical model based on the processing of the design data by a computer implemented numerical control manufacturing facility.

The foregoing and other features of the present method and system will become more apparent upon reading of the following non-restrictive description of examples of implementation thereof, given by way of illustration only with reference to the accompanying drawings.

### BRIEF DESCRIPTION OF THE DRAWINGS

Figure 1A illustrates a perspective view of a body part of a patient in accordance with a non restrictive illustrative embodiment;

Figure 1B illustrates a perspective view of a body part that comprises implants in accordance with a non restrictive illustrative embodiment;

Figure 1C shows multiple views of three-dimensional X-ray representations in accordance with a non restrictive illustrative embodiment;

Figure 2 illustrates a schematic diagram of a system for determining the position and orientation of implants located in a body part in accordance with a non restrictive illustrative embodiment; and

Figure 3 shows a block diagram of a method for determining the position and orientation of implants located in a body part in accordance with a non restrictive illustrative embodiment.

### DETAILED DESCRIPTION

In the following description, for purposes of explanation and not limitation, specific details are set forth such as particular architectures or techniques. It will be apparent to those skilled in the art that the system and method described hereinafter may be practiced in other embodiments that depart from these specific details.

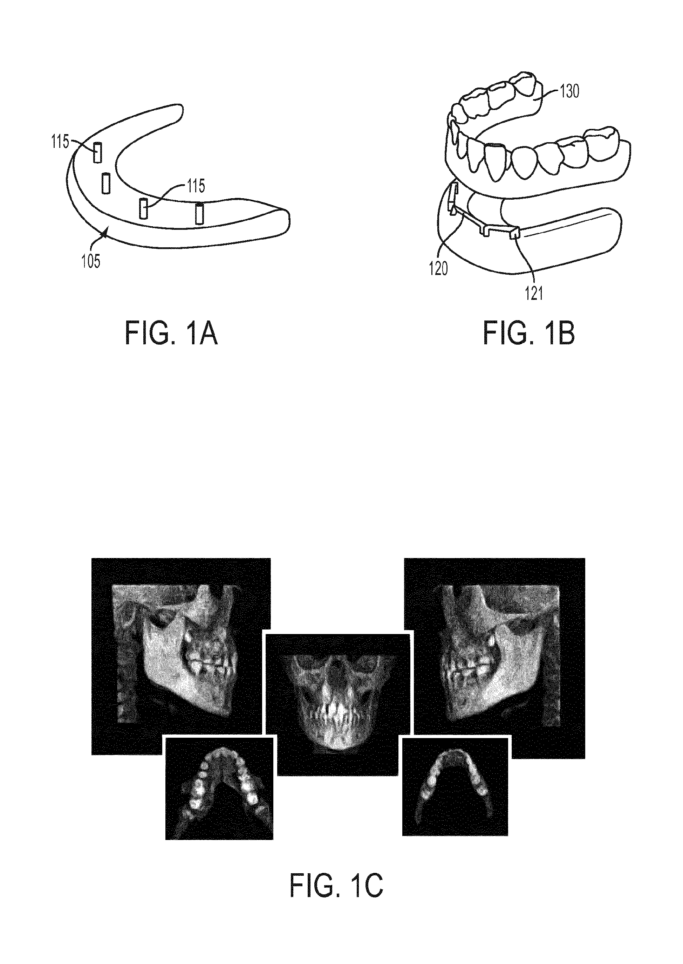

The present disclosure relates to restoration of body parts of a patient. A body part can be any human part such as a femur, a hip bone, a jawbone or the like. Reference is now made to Figure 1A, which illustrates a front view of a combination of a lower jawbone and gingiva 105 on which a dental prosthesis can be installed to provide restoration of the dental structure. Implants 115 can also have the shape and application of an anchor, a fixture or the like. In Figure 1B, the implants support a bar 120 allowing a dental prosthesis 130 to rest on the jawbone and gingiva 105. The bar 120 comprises mounting portions 121 providing mechanical connections adapted to mount and fasten (assemble) the bar on top of the implants 115.

The bar 120 can be designed, prototyped or manufactured, provided that exact position and orientation of each of the implants 115 are known, so that a snug and accurate fit of the bar on top of the implants is enabled. Pursuant to the present disclosure, this can be accomplished without the use of a cast and other extensive steps according to known methods. The exact position and orientation of each implant 115 is determined by retrieving the position of each implant relative to XYZ reference axis in a three-dimensional radiographic representation such as a three-dimensional X-ray representation of the jawbone and gingiva 105. The three-dimensional X-ray representation of the jawbone and gingiva 105 including implants 115 can be generated with a minimally invasive technique, such as a cone beam computer tomographic scanner (CBCT scan). A suitable three-dimensional radiographic representation may also be generated by positron emission tomography (PET SCAN), magnetic resonance imagery (MRI), or like techniques usable for generating three-dimensional representations of visible and hidden parts of the body and implanted structures. The radiographic representations such as DICOM files of X-ray images or representations can then be analyzed with a computing system. An example of three-dimensional X-ray representation is provided in Figure 1C, where sliced images of the X-ray representation illustrate different views of a scanned body part.

A three-dimensional X-Ray representation is made of voxels, which is a cubic picture element. The resolution corresponds to one voxel's side length. The resolution of voxels may be determined prior to the use of a three-dimensional scanner, as a function of the desired accuracy in determining the position and orientation of the implants. For example, the three-dimensional scanner may generate a three-dimensional representation with voxels having a resolution of less than a millimeter.

Voxels may have various properties. One of those properties is indicative of the opacity to radiation (or transitivity) of material in a generated three-dimensional X-ray representation. For example, as a body part is made of different compositions such as bones and tissues, they are represented with a different opacity when they are scanned with the three-dimensional scanner. This is defined as the intensity value of a voxel. Similarly, an implant is made from high density material such as for example a metal or an alloy, which has a high opacity, and to which corresponds a specific voxel intensity value.

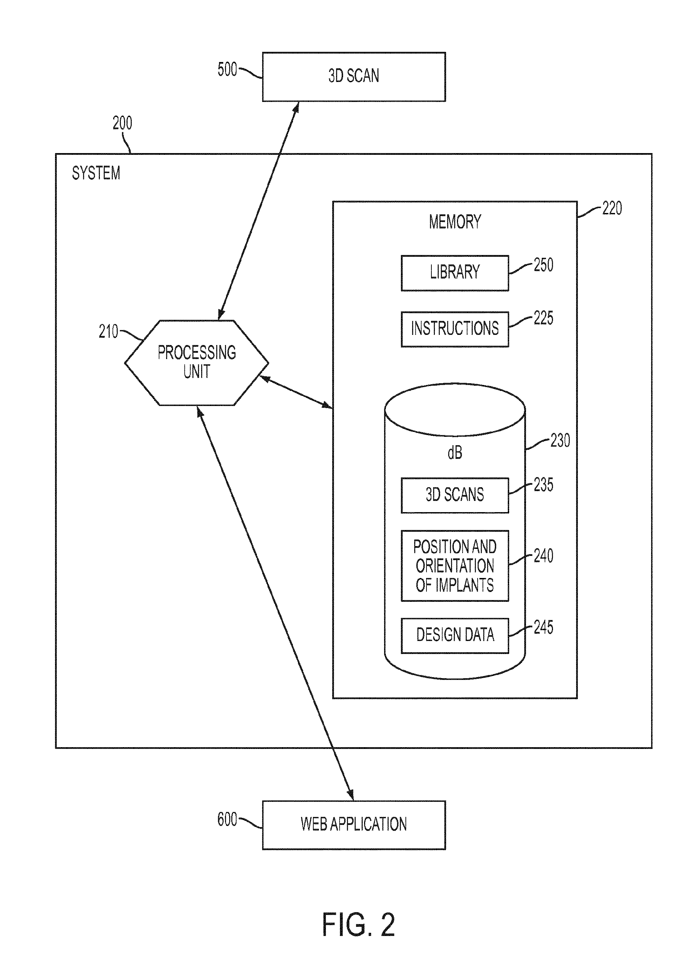

Reference is now made to Figure 2, which illustrates a schematic diagram of a system 200. The system 200 comprises a processing unit 210. The processing unit 210 can be any combination of software, hardware device that can perform operations on data, and instructions to and from other devices in the system 200. The system 200 also comprises a memory 220. The processing 210 unit interprets software programs and accesses the memory 220 to operate the system 200. The processing unit 210 is configured to execute instructions 225 and to identify voxels having an intensity value corresponding to a material in which an implant is made in a three-dimensional X-ray representation of a body part.

The memory unit 220 also stores files of three-dimensional representation 235 obtained from a three-dimensional radiographic scanner 500 in a database (dB) 230, and transmitted from the radiographic scanner 500 to the system 200. The memory unit 220 can be for example any combination of software, hardware device that can store data to be written or accessed by the processing unit 210. The memory unit 220 is configured to store instructions 230 to be executed by the processing unit 210 to obtain the position and orientation (spatial coordinates) 240 of implants located in a body part of a patient. The orientation is the vertical vector that passes through the center axis of an implant and the position is an XYZ coordinate of the point located in the center of the top part of the implant.

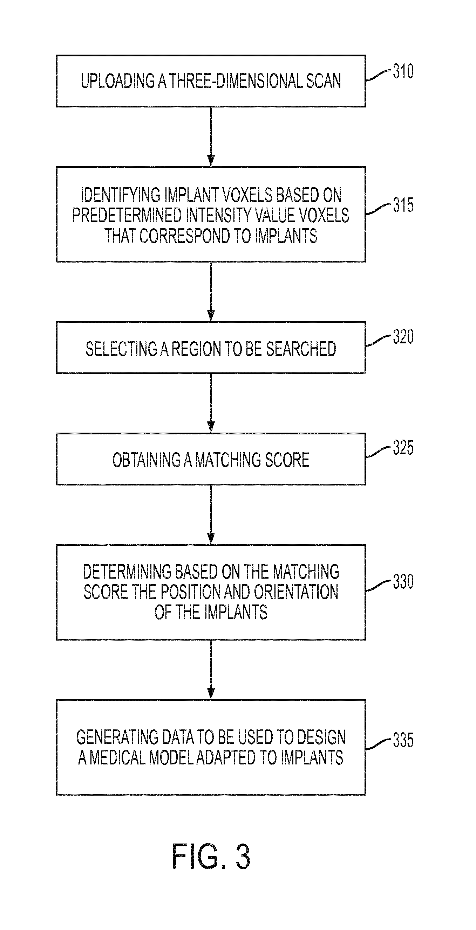

Reference is now made to Figure 3, which shows a block diagram of a method for determining the position and orientation of implants located in a body part of a patient. Steps described in the method may be executed sequentially and repeatedly by the system 200, until the position and orientation of implants are retrieved. The system 200 may automatically detect a number of implants for which position and orientation are required to design an appropriate prosthesis or medical model. Alternatively, the system 200 may ask a user to input the number of implants for which position and orientation are required to design an appropriate bar, prosthesis or medical model.

At step 310, the system uploads a three-dimensional radiographic (X-ray) image file 235 from the memory 220. A user may upload a three-dimensional representation received from the three-dimensional scanner 500 and may observe the view of each sliced image as a bitmap. The user or alternatively the system 200 may determine the coordinates (Xmin, Xmax, Ymin, Ymax, Zmin, Zmax) where the implants of interests are located based on the intensity value of the voxels.

At step 315, the processing unit 210 identifies voxels having an intensity value characterizing implants. Voxels having an intensity value corresponding to implants are voxels that represent a portion of an implant in the three-dimensional X-ray representation. The three-dimensional X-ray representation may comprise different voxel intensity values or colors such as white, grey or black voxels. A scanned implant made of metal or alloy material can appear to be white, the bone can appear to be light grey, gingiva can appear to be dark gray and a void space can appear to be black. This allows defining an intensity value based on the opacity of material similar to the opacity observed in 2D X-ray images. Therefore, variations in opacity on the three-dimensional X-ray representation enable separating and discriminating different scanned materials, such as implants, bones or tissues. The skilled reader will understand that implants can be made of different materials, which can be non-metal material, such as for example ceramic or composite material like zirconia or hydroxypatite, which generate a different characteristic color or intensity, i.e. opacity, when scanned with the three-dimensional radiographic scanner 500.

At step 320, the processing unit 210 selects a region (subset of voxels) to be searched for implants in the three-dimensional X-ray representation file. The system 200 determines a bounded region, which can be aligned to form a box or a different volumetric shape that contains the volume of voxels in the three-dimensional X-ray representation. The system 200 may ask the user to select from a virtual library the model of implants to be searched. Alternatively, the system may detect the model of implants while searching the position and orientation of the implants, by referring to an implant shapes library in the database 230 of the memory 220, and executing instructions according to a shape recognition algorithm.

At step 325, the processing unit 210 generates virtual implants in the selected region. A virtual implant is a virtual replica of an implant model as selected or detected at 320, or an approximated shape such as a cylinder. A virtual implant has a volume revolution with a position and an orientation. The system 200 randomly generates within the selected region a large number of different virtual implants, each having their own virtual position and orientation. The system 200 determines a matching score for each virtual implant, which is based on the number of voxels having an intensity value corresponding to implants contained inside each generated virtual implant.

At step 330, the processing unit 210 sorts each virtual implant according to their matching score. The processing unit 210 repeats step 325 until the highest matching score obtained for a virtual implant stops increasing after a number of iterations. This determines the position and the orientation of an actual implant. The processing unit 210 then stores this position and orientation set 240 in the memory unit 220. The processing unit 210 eliminates each located implant from the searched sets of voxels prior to repeating step 325. This is done to avoid looking for an implant for which position and orientation have already been determined.

At step 335, when the processing unit 210 determines that the position and orientation 240 of all implants are identified, it generates design data 245 to be used to design a medical model, such as a bar 120, adapted to fit the located implants. In addition to implant position and orientation data, dimensional parameters of the implants being used must be known. The dimensional parameters can be retrieved by the processing unit 210 from a library, such as library 250 in the data base 230, to provide all necessary data required to design a properly adapted medical model 120. Based on position, orientation and dimensional parameters of the implants, design data 245 can be generated and stored as a file, such as an STL file, in the memory 220. The processing unit 210 may use spatial coordinates of the implants to determine the virtual model of a prosthesis to be adapted to the located implants.

The system 200 may use a world wide web (WWW) application 600 for transmitting design data 245 of the virtual model to be adapted to the located implants, for example, from a medical clinic to a location where the prosthesis can be prototyped or manufactured. The system 200 may generate and transmit design data representative of the medical model to be manufactured or alternatively, provide design data representative of the implants' location and orientation but requiring further steps of model design taking into account implant dimensional parameters and other complementary design data and information to complete the model's design. This can be accomplished by using an other system, such as a known type of computer assisted design (CAD) system, receiving design data 245 from the system 200.

According to another embodiment, the scanner 500 may be remotely located from the system 200. Three-dimensional radiographic files obtained from the scanner, for example in a dentistry or radiological clinic, may be transmitted to the remotely located system 200 through another Web application. The system 200 may for example be located in a prosthesis fabrication facility, which may use the Web application 600 to subcontract the fabrication of specific parts of the medical model or prosthesis to a specialized facility, such as a rapid prototyping facility or an advanced machining facility.

In another particular embodiment, the present disclosure relates to a method for fabricating a medical model for assembly of implants in a body part of a patient. The method determines a relative position and orientation of the implants by processing, by means of a computer, the three-dimensional radiographic representation of the body part as previously discussed. The method continues by designing a virtual medical model of a fixture having a shape and size adapted to enable proper assembly of the fixture on at least some of the implants in the body part, and generating design data based on information related to the virtual medical model. The method may further comprises generating a physical model based on the processing of the design data by a computer implemented numerical control manufacturing facility, such as for example a multi-axis milling machine, and/or a three-dimensional rapid prototyping machine.

In conclusion, the system and method are not to be limited to those examples described above or the drawings shown. Although the system and method have been described and illustrated in the accompanying Figures and described in the foregoing Detailed Description, it will be understood that the system and method are not limited to the embodiments disclosed, but is capable of numerous rearrangements, modifications and substitutions, without departing from the scope of the claims.

## Claims

1. A system for determining position and orientation of implants located in a body part of a patient, the system comprising:
a processing unit for:
determining in a three-dimensional radiographic representation of the body part an intensity value of voxels representing the implants;
generating multiple random virtual implants and providing a score for each virtual implant, the score being based on a number of voxels contained in each generated virtual implant; and
determining position and orientation of the implants in the three-dimensional radiographic representation of the body part based on the score of each virtual implant.

2. The system of claim 1, wherein the processing unit generates multiple random virtual implants in various combinations of location and position.

3. The system of claim 1, wherein the processing unit further:
selects a region of the three-dimensional radiographic representation to be searched for implants; and
generating the random virtual implants is performed in the selected region.

4. The system of claim 1, wherein the processing unit further:
generates data to be used to design a medical model adapted to the implants located in the body part.

5. The system of claim 1, further comprising a memory unit for:
storing instructions to be executed by the processing unit to determine the position and orientation of implants located in the body part.

6. A method for determining position and orientation of implants located in a body part of a patient, the method comprising:
uploading a three-dimensional radiographic representation of the body part, the three-dimensional radiographic representation having voxels of different intensity values;
identifying voxels corresponding to the implants in the radiographic representation, based on an intensity value of the voxels;
selecting a region to be searched for implants in the radiographic representation;
generating multiple random virtual implants in the selected region until obtaining a score that identifies implants located in the body part, the score being based on the number of voxels of intensity values corresponding to the implants contained in each generated virtual implant;
determining, based on the score of the virtual implants, the position and orientation of the implants in the three-dimensional radiographic representation; and
generating data to be used to design a medical model adapted to the implants located in the body part.

7. A method for fabricating a medical model for assembly on implants in a body part of a patient, the method comprising:
determining a relative position and orientation of said implants by processing, by means of a computer, a three-dimensional radiographic representation of the body part, the three-dimensional radiographic representation having voxels of intensity values representative of the presence of implants;
retrieving dimensional parameters of the implants from a data base providing dimensional information per type of implant;
designing a virtual medical model of a fixture having a shape and size adapted to enable proper assembly of the fixture on at least some of the implants in the body part;
generating design data based on information related to the virtual medical model; and
generating a physical model based on the processing of the design data by a computer implemented numerical control manufacturing facility.

8. The method according to claim 7, wherein the facility comprises a multi-axis milling machine.

9. The method according to claim 7, wherein the facility comprises a three-dimensional rapid prototyping machine.

10. The method according to claim 7, wherein retrieving dimensional parameters of the implants comprises retrieving data from a data base library of implant types and characteristics.
